# EUROPEAN PATENT APPLICATION

(11) **EP 2 544 103 A1**
(43) Date of publication of application: **09.01.2013**
(21) Application number: 11290310.9
(22) Date of filing: 04.07.2011
(51) Int. Cl.: G06F 17/30, G06Q 10/00

(54) **A method and system to interact with objects**

(71) Applicant: Alcatel Lucent, 75007 Paris (FR)
(72) Inventor: Frieda, Godon Marc Bruno, 1840 Londerzeel (BE); Mohamed Ali, Feki, 1190 Brussel (BE)
(74) Representative: Plas, Axel Ivo Michel

(57) **Abstract**

The method to interact with objects according to the invention comprises:
- identifying a first object class of a first object;
- identifying a second object class of a second object;
- consulting a networked database for possible associations between the first object class and the second object class;
- receiving an overview of possible associations between the first object class and the second object class; and
- selecting an association between the first object class and the second object class and instantiating a selected association on the first object and the second object.

## Description

### Field of the Invention

The present invention generally relates to complex interactions with objects like for instance reparation of a tire, maintenance of a garden park, etc. The invention in particular concerns automated, fast and smart guidance on how to interact with objects.

### Background of the Invention

In daily situations, people are confronted with complex interactions with objects such as cars, bikes, plants, household equipment, food, furniture, etc. These objects generally do not expose how to safely and rapidly interact with them in order to accomplish certain activities, like repairing a bike wheel, maintaining plants in a garden park, preparing a dish, etc.

A first category of existing solutions for guidance on interaction with objects consists of CAD tools that provide a context driven overview of possible actions on certain classes of objects.

A second category of solutions for guidance on interaction with objects consists of online interest groups that provide information on how to interact with certain objects.

Both CAD tools and online interest groups provide partial information, and do not interactively guide people in the interaction with an object in a certain context. Existing solutions in other words fail to offer people smart, visual guidance in the interaction with real life objects. In particular for technology agnostic people like amateur users, elderly people, kids, school, store or office personnel, etc., automated, fast and intuitive visual guidance on interaction with a wide variety of objects in several physical environments is desirable.

It is an objective of the present invention to resolve the above mentioned shortcomings of existing solutions for guidance on interaction with objects. In particular, it is an objective of the present invention to disclose a method and system for interaction with objects that interactively and intuitively guides persons on the interaction with complex objects in a certain context. It is a further objective of the present invention to disclose such method that is applicable in many physical environments and on top of a wide range of infrastructure types.

### Summary of the Invention

According to the present invention, the above defined objectives are realized by the method to interact with objects defined by claim 1, the method comprising:
- identifying a first object class of a first object;
- identifying a second object class of a second object;
- consulting a networked database for possible associations between the first object class and the second object class;
- receiving an overview of possible associations between the first object class and the second object class; and
- selecting an association between the first object class and the second object class and instantiating a selected association on the first object and the second object.

Thus, the invention consists in establishing an interactive user experience wherein the user is intelligently guided on possible associations between identified object classes in a context, presented as an ordered, random or pseudo-random list, that he/she can select and instantiate. The method can be implemented on any simple mobile device with network connectivity and a camera, tag reader, barcode scanner or the like for identification of the object classes, e.g. a mobile phone, smart phone, tablet PC, etc.

Optionally, as defined by claim 2, identifying the first object class may comprise visual recognition or tag reading.

Indeed, one way to identify an object class may involve taking a picture of the first object and identifying the first object class through visual recognition. The visual recognition may be located in the mobile device that is used for taking the picture, or in the network where the mobile device connects to. Alternatively, the first object class may be identified through reading and interpreting a tag, e.g. an RFID tag, fixed on or integrated in the first object. Hence, if the user takes a picture of his bike, the bike class shall be identified as first object class.

Further optionally, as defined by claim 3, identifying the second object class may comprise visual recognition or tag reading or selection out of an option list.

Indeed, just like the first object class, the second object class may be identified by taking a picture of the second object and visually recognizing the first object, or by reading a product tag that is fixed onto or integrated into the second object. Alternatively, the system may suggest object classes for the second object out of an option list of object classes that are interrelated with the first object class. For instance the class of wheels or tires could be suggested if the first object class is the bike class.

According to a further optional aspect of the current invention, defined by claim 4, the possible associations may be ordered according to popularity in an ordered overview.

Indeed, the list of candidate associations for interaction and how to instantiate these associations for reasons of convenience may be presented in a certain order of priority. The order could be based on popularity of the following triplet: first object class, second object class, association.

Alternatively, as defined by claim 5, the possible associations may be ordered according to user profile in an ordered overview.

Indeed, the user's profile of interest may help in establishing the order wherein the associations are presented to him/her.

According to yet another alternative, defined by claim 6, the possible associations may be ordered according to social network status in an ordered overview.

Hence the order wherein the triplets of first object class, second object class and association is presented, may depend on usage of the associations by friends.

It is noticed that the above examples for ordering the list of possible associations are not exhaustive. Alternative parameters or criteria may be considered to set the priority order of the associations, e.g. the context, and plural parameters or criteria may be combined to determine the priority order for presenting the associations to the user. Instead of an ordered list, the possible associations may be presented to the user through a random or pseudo-random list. If the first object is for instance supposed to be a particular Lego building block, the application according to the present invention may suggest second object classes and associations in a pseudo-random order related to the shape, colour, etc. of the Lego building block.

According to a further optional aspect defined by claim 7, the method according to the current invention further comprises instructing the first object or the second object to elaborate the association.

Indeed, in case the objects are intelligent, an object of the identified classes could be instructed to elaborate the association autonomously. In this case the user could interactively monitor the progress of instantiation. The implementation of the instantiation procedure is beyond the scope of the present invention.

In addition to a method for interaction with objects as defined by claim 1, the present invention also concerns a corresponding system to interact with objects as defined by claim 8, the system comprising:
- means for identifying a first object class of a first object;
- means for identifying a second object class of a second object;
- means for consulting a networked database for possible associations between the first object class and the second object class;
- means for receiving an overview of possible associations between the first object class and the second object class; and
- means for selecting an association between the first object class and the second object class and instantiating a selected association on the first object and the second object.

Optionally, as defined by claim 8, the system may further comprise- means for instructing the first object or the second object to elaborate the association selected.

In summary, the system shall consists of a mobile device with camera or tag reader for photographing or scanning objects and/or with a 3D scanner based on laser, sound, radar or a variant 3D scan technology, network connectivity towards a database of associations between object classes, intelligence in the mobile device or network for identifying object classes, a display in the mobile device to visualize a list of associations, and a user interface like buttons or a touch screen in the mobile device for selecting and instantiating an association. The instantiation procedure could then interactively guide the user step by step. In case the objects are intelligent, the first and/or second object could even be instructed to elaborate the selected association autonomously. In the latter case, the user could interactively monitor progress of the instantiation.

### Brief Description of the Drawings

Fig. 1 and Fig. 2 illustrate the step of identifying a first object class in an embodiment of the method according to the present invention;

Fig. 3 and Fig. 4 illustrate the step of identifying a second object class in an embodiment of the method according to the present invention; and

Fig. 5 illustrates the step of selecting and instantiating an association in an embodiment of the method according to the present invention.

### Detailed Description of Embodiment(s)

The current invention concerns a concept for easy, intuitive, visual user experience in smart guided interactions, which is applicable in many physical environments, and on top of a wide range of infrastructure types.

The user is intelligently guided on possible associations between identified object classes in a context which he/she can instantiate. When a candidate instantiation is found , an instantiation procedure could interactively guide the user step by step. The intelligent guidance may be realized through an instruction set that interactively guides the user to carry out a sequence of actions. Depending on the user's response, the application may automatically sense the abilities and skill level of the user and adapt the instruction set and/or the way of interacting with the user to the user's abilities, e.g. in case only auditive or only visual interaction is possible, and to the user's skill level, e.g. by switching between beginner, custom and expert levels. The implementation of the instantiation procedure however is beyond the scope of the present invention. In case the objects are intelligent, an object of the identified classes could be instructed to elaborate the association autonomously. In the latter case the user could interactively monitor the progress of instantiation. A first object class is identified via visual recognition, tag reading, etc. A second object class is identified similarly or could also be suggested by the system and selected out of an option list. The douplet of object classes is then used as key to consult a local or networked database, to consult the Internet, e.g. via Google search, or any other networked knowledge source. In response the user receives an overview of possible associations and how to instantiate them. The candidate associations may be presented in a certain order or priority. This order could be based on popularity, on personal profile, social network status, context, etc. Instructions and guidelines found can then be consulted online.

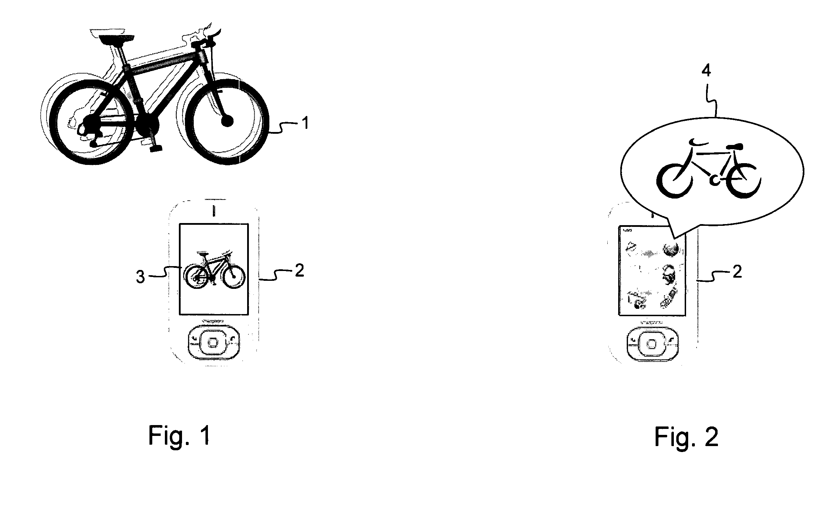

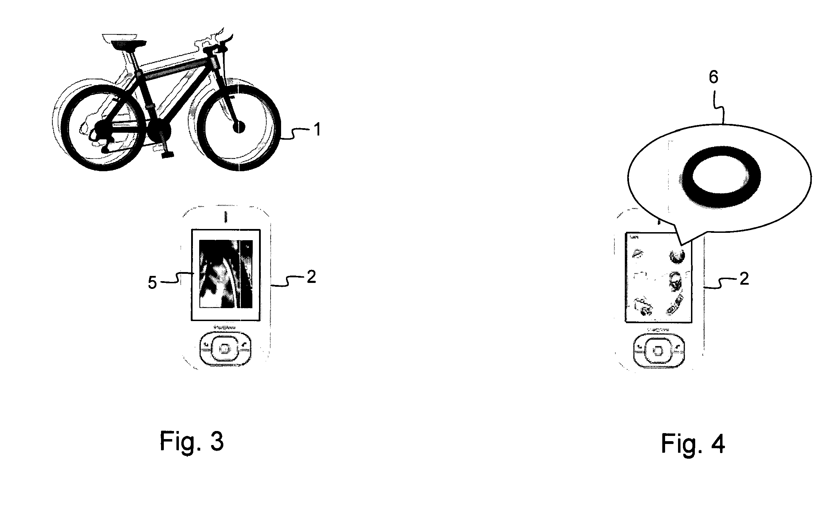

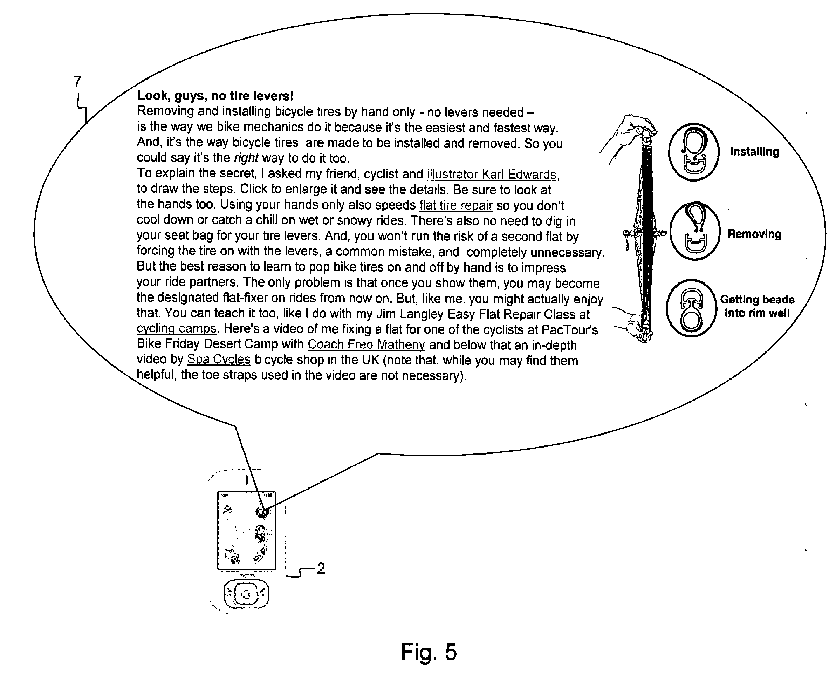

In Fig. 1, the user takes a picture 3 of his bike 1 with the camera in his smart phone 2. An application running on the smart phone 2 identifies the bike class 4 as the first object class. This is illustrated by Fig. 2. Thereafter, as shown in Fig. 3, the user takes a picture 5 of the front wheel of his bike 1 with his smart phone 2. The application running on smart phone 2 identifies the wheel class as the second object class. This is illustrated by Fig. 4. With the bike class and wheel class as key, the sytems responds by questioning the user for product codes printed on the side of the tire. The user thereupon inserts the codes he can read. The system explores several knowledge sources and lists potential activities associated with the two classes, e.g. repairing flat tire, unmounting a tire, buying a new tire of this type in the immediate neigboorhood, calling a friend 2 miles ahead who has the same tires on his bike, etc. The user selects an activity thereby instantiating an associtaion between the two classes. The user shall then be guided step by step through the instantiated activity as is illustrated by 7 in Fig. 5.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method to interact with objects, said method comprising:
- identifying a first object class of a first object;
- identifying a second object class of a second object;
- consulting a networked database for possible associations between said first object class and said second object class;
- receiving an overview of possible associations between said first object class and said second object class; and
- selecting an association between said first object class and said second object class and instantiating a selected association on said first object and said second object.

2. A method according to claim 1,
wherein identifying said first object class comprises visual recognition or tag reading.

3. A method according to claim 1,
wherein identifying said second object class comprises visual recognition or tag reading or selection out of an option list.

4. A method according to claim 1,
wherein said possible associations are ordered according to popularity in an ordered overview.

5. A method according to claim 1,
wherein said possible associations are ordered according to user profile in an ordered overview.

6. A method according to claim 1,
wherein said possible associations are ordered according to social network status in an ordered overview.

7. A method according to claim 1, further comprising:
instructing said first object or said second object to elaborate said association.

8. A system to interact with objects, said system comprising:
- means for identifying a first object class of a first object;
- means for identifying a second object class of a second object;
- means for consulting a networked database for possible associations between said first object class and said second object class;
- means for receiving an overview of possible associations between said first object class and said second object class; and
- means for selecting an association between said first object class and said second object class and instantiating a selected association on said first object and said second object.

9. A system to interact with object according to claim 8, further comprising:
- means for instructing said first object or said second object to elaborate said association selected.
